# EUROPEAN PATENT SPECIFICATION

(11) **EP 2 047 547 B1**
(45) Date of publication and mention of the grant of the patent: **07.09.2011**
(21) Application number: 07768487.6
(22) Date of filing: 20.07.2007
(51) Int. Cl.: H01M 4/88, H01M 8/10, H01M 4/86

(54) **METHOD OF MANUFACTURING A MEMBRANE-ELECTROLYTE ASSEMBLY FOR FUEL CELLS, AND MEMBRANE-ELECTROLYTE ASSEMBLY**
VERFAHREN ZUR HERSTELLUNG EINER MEMBRAN-ELEKTROLYT-BAUGRUPPE FÜR BRENNSTOFFZELLEN UND MEMBRAN-ELEKTROLYT-BAUGRUPPE
PROCÉDÉ DE FABRICATION D'UN ENSEMBLE MEMBRANE-ÉLECTROLYTE POUR DES PILES À COMBUSTIBLE, ET ENSEMBLE MEMBRANE-ÉLECTROLYTE

(30) Priority: 21.07.2006 JP 2006199851
(43) Date of publication of application: 15.04.2009
(73) Proprietor: Toyota Jidosha Kabushiki Kaisha, Toyota-shi, Aichi 471-8571 (JP)
(72) Inventor: HAMA, Yuichiro, Toyota-shi Aichi 471-8571 (JP); KURUNGOT, Sreekumar, Toyota-shi Aichi 471-8571 (JP)
(74) Representative: Kuhnen & Wacker
(86) International application number: PCT/JP2007/064722
(87) International publication number: WO 2008/010613

(56) References cited:
- EP-A1- 0 952 241
- US-A1- 2002 034 677
- US-A1- 2002 068 215

## Description

### TECHNICAL FIELD

The present invention relates to a method of manufacturing a membrane-electrolyte assembly used in fuel cells, particularly polymer electrolyte fuel cells, a membrane-electrolyte assembly, and a fuel cell using the membrane-electrolyte assembly.

### BACKGROUND ART

As an example of fuel cells, the polymer electrolyte fuel cell is known, which includes a membrane-electrolyte assembly (MEA) as a major constituent element. The membrane-electrolyte assembly consists of an electrolyte membrane on one side of which an air-electrode catalyst layer is stacked and on the other side a fuel-electrode catalyst layer is stacked. The assembly is sandwiched by separators having gas channels to form an individual fuel battery called a "single cell."

Normally, the electrolyte membrane employs a Nafion (registered trademark) membrane. The air-electrode catalyst layer and the fuel-electrode catalyst layer are normally formed by either direct coating method or transfer method. The direct coating method involves preparing a mixture (catalyst layer ink) of a carbon support supporting a catalytic component, such as platinum, an electrolyte solution, which is an electrically conductive substance, and a solvent, and then applying the mixture to the electrolyte membrane and drying it. The transfer method involves thermal compression-bonding of an air-electrode catalyst layer and a fuel-electrode catalyst layer, which are separately formed using the catalyst layer ink, onto the electrolyte membrane.

When manufacturing the membrane-electrolyte assembly by the direct coating method or the transfer method, there is the problem of insufficient bond between the electrolyte layer and the catalyst layer, which causes an interface debonding during electricity generation and results in a decrease in generation efficiency. In the case of the transfer method, there is the problem of possible damage to the electrolyte layer by the pressure during transfer. Furthermore, in the transfer method, the electrolyte layer and the catalyst layer need to be fabricated separately, and in the direct coating method the electrolyte layer need to be fabricated separately. This requires multiple manufacturing steps and results in a decrease in productivity.

In order to solve the aforementioned problems, Patent Document 1 proposes a method of manufacturing a membrane-electrolyte assembly involving a solution three-layer coating method. In this method, the membrane-electrolyte assembly is manufactured by performing the application and drying of inks (catalyst layer ink and electrolyte layer ink) for individual layers in the following order: a first catalyst layer, which is one of the air electrode and the fuel electrode; the electrolyte layer; and a second catalyst layer, which is the other of the air electrode and the fuel electrode. In this manufacturing method, since the catalyst layer is brought into contact with the electrolyte solution (electrolyte layer ink), the electrolyte within the catalyst layer is partially dissolved to facilitate its integration with the electrolyte layer. As a result, the electrolyte layer and the catalyst layer are strongly bonded at their interface, whereby cell resistance during generation can be reduced and improved generation efficiency can be achieved. Furthermore, this method provides higher productivity than the direct coating method or the transfer method.

In the membrane-electrolyte assembly, in order to allow an electrode reaction to proceed in the catalyst layer with high efficiency, it is desired to improve gas diffusibility and drainage in the catalyst layer. For this purpose, an appropriate pore-forming agent has been added in the catalyst layer ink to ensure that there are required pores in the catalyst layer, as disclosed in Patent Document 2, for example.
Patent Document 1: JP Patent Publication (Kokai) No. 2005-294123 A
Patent Document 2: JP Patent Publication (Kokai) No. 2003-151564 A

US 2002/0334677 A1 discloses a past like ink prepared by dissolving camphor in an alcoholic solvent and dispersing fine carbon particles with a catalyst carried thereon in the solvent. A sheet-like electrode-forming member is formed on an electrolyte membrane by screen printing the past-like ink thus obtained. The electrode-forming member is dried at 80°C for one hour, in order to deposit camphor included in the electrode-forming member as a pore-forming agent. The electrode forming member and the electrolyte membrane are joined with each other by hot pressing. The joint body of the electrode-forming member and the electrolyte membrane is dried under vacuum at 80°C for three hours, in order to sublimate and remove camphor depositing in the electrode-forming member. This gives an electricity-generating layer that is a joint body of an electrode having a plurality of pores and the electrolyte membrane. The manufacturing process of the invention thus gives a joint body of an electrode having sufficient gas permeability and electrical conductivity and an electrolyte membrane.

US 2002/0068215 A1 discloses a gas diffusion layer used for at least one of the gas diffusion layers of a fuel cell where a fuel electrode catalyst layer and an air electrode catalyst layer are disposed at both faces of an electrolyte film, and further a gas diffusion layer is disposed respectively on the outer surface of the fuel electrode side catalyst layer and air electrode side catalyst layer, characterized by that the gas diffusion layer is formed of a mesh sheet having heat resistance and acid resistance, an a mixture of electrically conductive powder and water repellent filler for filling voids of the mesh sheet.

EP 0 952 241 A1 discloses an electrocatalyst having poisoning resistance to carbon monoxide for use in solid polymer electrolyte fuel cells, an electrode, a membrane-electrode assembly, and a solid polymer electrolyte fuel cell, using said electrocatalyst. The electrocatalyst is comprised of a cubic platinum-ruthenium solid solution alloy and a hexagonal ruthenium supported together on a conductive carbon carrier.

### DISCLOSURE OF THE INVENTION

### PROBLEMS TO BE SOLVED BY THE INVENTION

The solution three-layer coating method described in Patent Document 1 for manufacturing a membrane-electrolyte assembly is highly effective. However, when the first catalyst layer as a lower layer is coated with the electrolyte solution (electrolyte ink), the electrolyte solution can seep into the pores formed in the first catalyst layer to thereby block some of the pores. Should such phenomenon occur, the gas diffusibility and drainage during electricity generation become partly inhibited. Thus, overcoming such seeping phenomenon is one of the issues to be addressed before a membrane-electrolyte assembly with high generation efficiency can be manufactured.

In view of the foregoing, it is therefore an object of the invention to provide a method of manufacturing a membrane-electrolyte assembly using the solution three-layer coating method, whereby the seeping of electrolyte solution into the pores in the catalyst layer can be prevented and a membrane-electrolyte assembly with high generation efficiency can be provided. Another object of the invention is to provide a membrane-electrolyte assembly manufactured by such manufacturing method. It is yet another object of the invention to provide a fuel cell using such membrane-electrolyte assembly.

### MEANS OF SOLVING THE PROBLEMS

The invention provides a method of manufacturing a membrane-electrolyte assembly by performing the application and drying of individual inks for a first catalyst layer, an electrolyte layer, and a second catalyst layer in order, wherein the electrolyte layer is subjected to drying treatment at a temperature higher than the drying treatment temperature of the first catalyst layer, the method comprising the steps of adding, into an ink for the first catalyst layer, a substance, as a pore-forming agent, that remains at the temperature of drying treatment of the first catalyst layer and that dissolves or sublimates and disappears at the temperature of drying treatment of the electrolyte membrane; applying the ink for the first catalyst layer; subjecting the thus applied first catalyst layer to drying treatment; applying an ink for the electrolyte layer; subjecting the applied electrolyte layer to drying treatment; applying an ink for the second catalyst layer; and subjecting the applied second catalyst layer to drying treatment.

In accordance with the present invention, in the step of coating an appropriate substrate member (which may be a substrate sheet such as carbon cloth, or a conventionally known diffusion layer) with the ink for the first catalyst layer and subjecting it to drying treatment, the pore-forming agent added remains in the ink as is. Therefore, when the electrolyte solution (ink for the electrolyte layer) is further added thereto, the electrolyte solution does not seep into the first catalyst layer. Then, in the step of subjecting the applied electrolyte ink to drying treatment at temperature higher than the drying treatment temperature for the first catalyst layer, the pore-forming agent added in the first catalyst layer ink dissolves or sublimates and disappears, whereby pores are formed in the first catalyst layer depending on the amount of the pore-forming agent added therein. At the same time, the electrolyte in the first catalyst layer re-dissolves, whereby the electrolyte layer and the first catalyst layer are strongly bonded to each other at their interface. Thereafter, the ink for the second catalyst layer is applied to the electrolyte layer and then drying treatment is performed, thereby obtaining the membrane-electrolyte assembly of the invention.

In the above method, the step of applying the ink for the second catalyst layer and subjecting the thus applied second catalyst layer to drying treatment is performed after the step of subjecting the applied electrolyte layer to drying treatment. Alternatively, the same effect can be obtained by performing the step of applying the electrolyte layer ink and then performing the step of applying the second catalyst layer ink thereto, followed by the step of subjecting the electrolyte layer and the second catalyst layer to drying treatment simultaneously at temperature higher than the drying treatment temperature of the first catalyst layer.

In accordance with the invention, the pore-forming agent may consist of any material as long as it remains at the temperature of drying treatment ofthe first catalyst layer and dissolves or sublimates and disappears at the temperature of drying treatment of the electrolyte membrane. Preferable examples are carbonates such as ammonium carbonate, calcium carbonate, and lithium carbonate, camphor, and naphthalene. Of these examples, ammonium carbonate and camphor are particularly preferable because none of their components that affect electricity generation remains in the catalyst layer after dissolution or sublimation.

In the present invention, the temperature at which the first catalyst layer and the electrolyte layer are subjected to drying treatment is set depending on the type of the catalyst layer ink and the electrolyte layer ink, particularly the latter. In the case of an electrolyte solution (such as Nation (registered trademark) solution) of which the electrolyte layer is comprised in the membrane-electrolyte assembly of a normal polymer electrolyte fuel cell, the temperature of drying treatment of the electrolyte layer is preferably 130°C or lower; in this case, the temperature of drying treatment of the first catalyst layer is preferably 60°C or lower. In this case, the aforementioned carbonate, camphor, or naphthalene remains in the first catalyst layer as is at the temperature of drying treatment of the first catalyst layer (60°C or lower); at the temperature of drying treatment of the electrolyte layer (such as 100°C to 130°C), they gradually dissolve or sublimate, and completely disappear after a required period of time, followed by the formation of a quantity of pores which depends on the amount of pore-forming agent that was used for impregnation, as mentioned above.

In the present invention, the amount of the pore-forming agent with which the first catalyst layer ink is impregnated is preferably 50 wt% or less with respect to the solid components (carbon, platinum, and electrolyte) of the catalyst layer ink, depending on the planned pore capacity of the first catalyst layer. Added amounts exceeding 50 wt% are not preferable because that would result in an increase in the viscosity of the ink and a drop in the coating property. Added amounts exceeding 40 wt% would result in reduced improvements in performance. Therefore, the added amount is preferably approximately 40 wt% even when a high pore capacity is desired.

In accordance with the invention, the method may include the step of adding into the ink for the second catalyst layer a substance, as the pore-forming agent, that dissolves or sublimates and disappears at the temperature at which the electrolyte membrane is subjected to drying treatment. When the first catalyst layer is the catalyst layer for one of the air electrode and the fuel electrode, the second catalyst layer is the catalyst layer for the other of the air electrode and the fuel electrode. The ink for the second catalyst layer may be the same as the ink for the first catalyst layer. The composition of the ink may be varied depending on whether the layer is the air-electrode catalyst layer or the fuel-electrode catalyst layer. The pore-forming agent added into the ink for the second catalyst layer may be the same as, or different from, the pore-forming agent added in the ink for the first catalyst layer, provided that the ink dissolves or sublimates and disappears at the temperature at which the electrolyte membrane is subjected to drying treatment.

This manufacturing method enables the formation of a required quantity of pores easily in the second catalyst layer, too. The amount of the pore-forming agent added is appropriately selected depending on the required pore capacity. In this case, too, the amount of pore-forming agent added is preferably 50 wt% or less with respect to the weight of the solid components of the catalyst layer ink (carbon, platinum, and electrolyte).

In the present invention, the application and drying treatment of the ink for at least the first catalyst layer of the first catalyst layer and the second catalyst layer may be performed in two or more steps. In this case, the amount of the pore-forming agent added in the ink in each step may be varied. In this embodiment, the pores formed in the first (and/or the second) catalyst layer in the membrane-electrolyte assembly obtained after drying treatment can be provided with a thickness-direction distribution. For example, when the pores in the catalyst layer are distributed such that the pore capacity is greater toward the diffusion layer or the separator than toward the electrolyte layer, the product water on the cathode side and the back-diffused water on the anode side can be efficiently drained out of the catalyst layer by capillary action. When the pores in the catalyst layer are distributed such that the pore capacity is greater toward the diffusion layer or the separator than toward the electrolyte layer, a membrane-electrode assembly in which instantaneous short-circuit is prevented and which is long-durable can be obtained. The diameter of the pore-forming agent particle may be simultaneously changed. In this case, the catalyst layer ink for the outer-most layer may contain no pore-forming agent added therein.

In the above case, a more realistic and practical method of manufacturing a membrane-electrolyte assembly can be obtained by having the step of applying the catalyst layer ink include at least an application step for forming an ink applied layer of which the amount of pore-forming agent added is 50 to less than 30 wt%, an ink applied layer of which the amount is 30 to less than 10 wt%, and an ink applied layer of which the amount is 10 wt% or less. In this case, too, the catalyst layer ink for the outer-most layer may contain no pore-forming agent added therein.

### EFFECTS OF THE INVENTION

In accordance with the present invention, in a method of manufacturing a membrane-electrolyte assembly using the solution three-layer coating method, the seeping of the electrolyte solution into the pores in the catalyst layer can be prevented. Thus, a membrane-electrolyte assembly with high generation efficiency having a uniform gas diffusibility and drainage property can be easily obtained. It also becomes possible to easily manufacture a membrane-electrolyte assembly having a catalyst layer with a desired pore capacity.

### BRIEF DESCRIPTION OF THE DRAWINGS

Fig. 1 illustrates the steps, in sequential order, of the method of manufacturing a membrane-electrolyte assembly according to one embodiment of the invention.
Fig. 2 illustrates the steps, in sequential order, of the method of manufacturing a membrane-electrolyte assembly according to another embodiment ofthe invention.
Fig. 3 illustrates the steps, in sequential order, of the method of manufacturing a membrane-electrolyte assembly according to yet another embodiment of the invention.
Fig. 4 illustrates the method of manufacturing a membrane-electrolyte assembly according to yet another embodiment of the invention.
Fig. 5 shows a graph indicating the relationship between the capacity of pores formed and the ratio of ammonium carbonate added in an example in which ammonium carbonate was used as a pore-forming agent.
Fig. 6 shows a graph indicating the relationship between voltage and current density, showing the performance of fuel cell modules comprising four types of the membrane-electrolyte assembly fabricated in accordance with the invention in the example using ammonium carbonate as the pore-forming agent.
Fig. 7 shows a graph indicating the relationship between the capacity of pores formed and the ratio of lithium carbonate added in an example in which lithium carbonate was used as a pore-forming agent.
Fig. 8 shows a graph indicating the relationship between voltage and current density, showing the generation efficiency of fuel cell modules comprising four types of the membrane-electrolyte assembly fabricated in accordance with the invention in the example using lithium carbonate as the pore-forming agent.
Fig. 9 shows a graph indicating the generation efficiency of a fuel cell module in an example in which the module comprised a membrane-electrolyte assembly using ammonium carbonate as a pore-forming agent.

### BEST MODE OF CARRYING OUT THE INVENTION

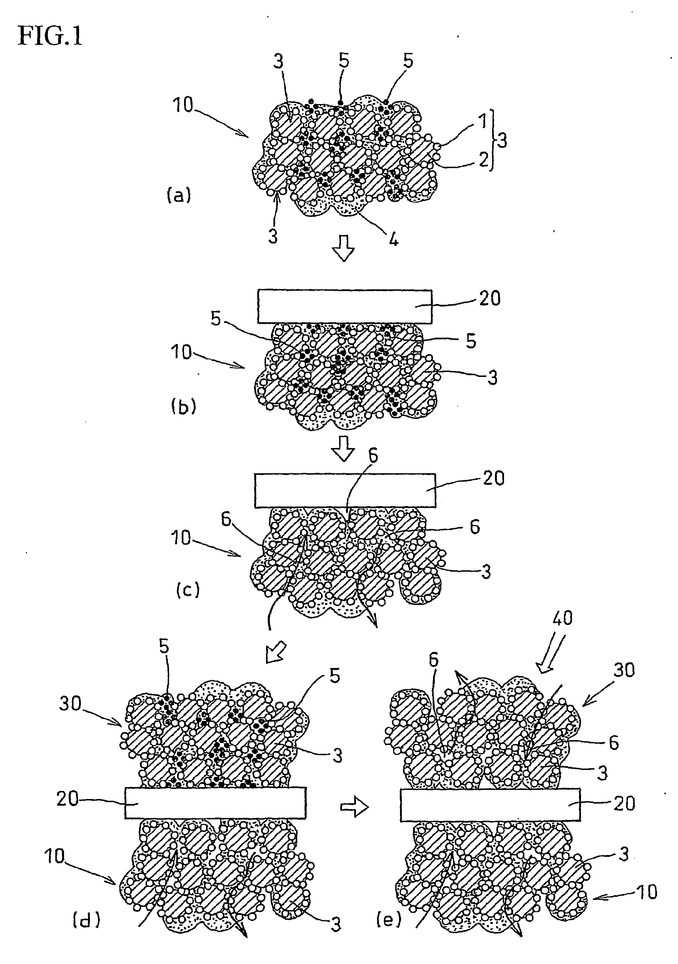

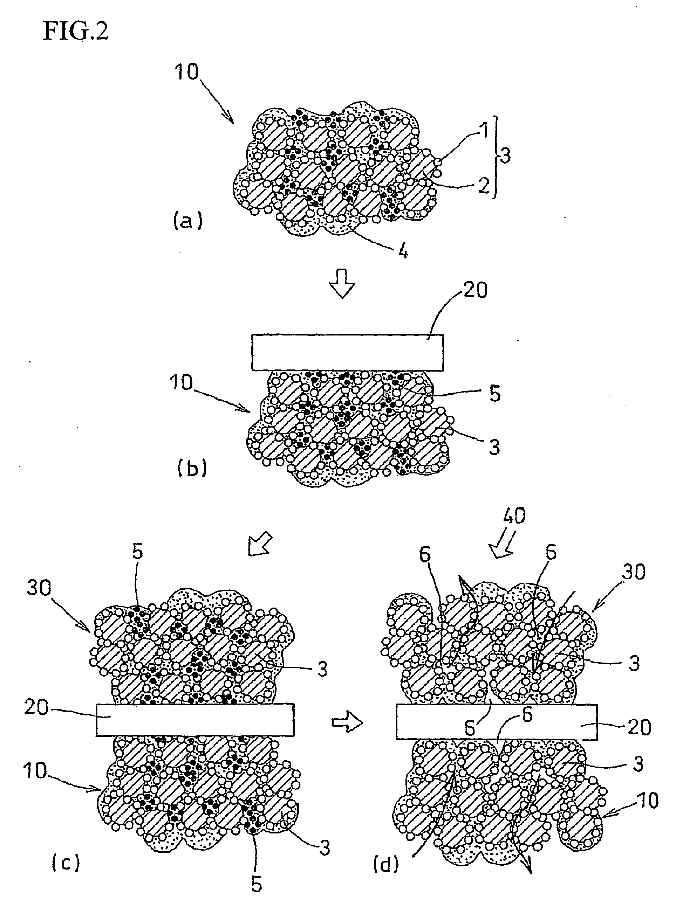

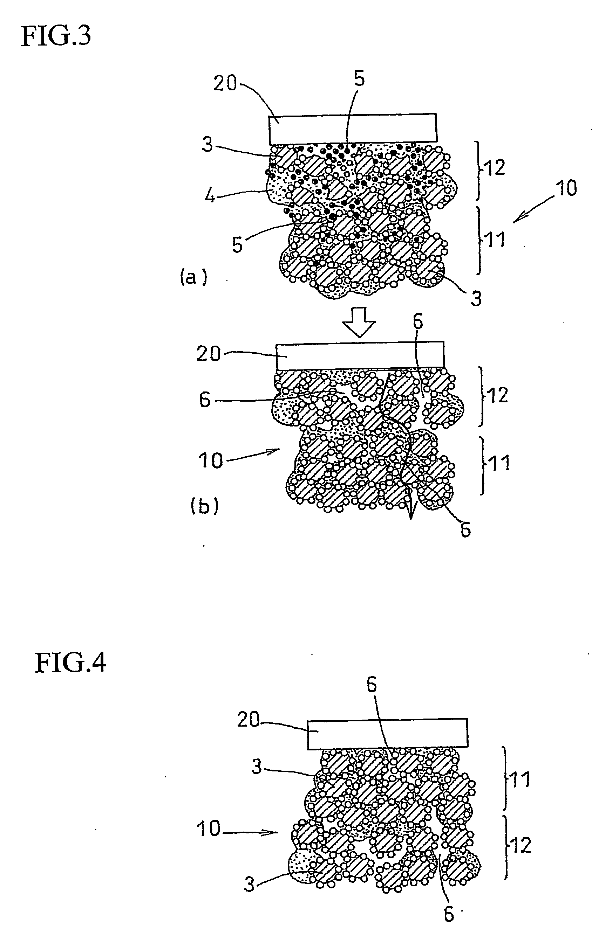

In the following, the invention is described by way of embodiments thereof with reference made to the drawings. Fig. 1 schematically shows an embodiment of a method of manufacturing a membrane-electrolyte assembly according to the invention. Fig. 2 schematically shows another embodiment thereof Figs. 3 and 4 show other two embodiments of the invention.

The catalyst layer ink used by the manufacturing method of the invention is composed of a catalyst-supported conductive particle 3, which consists of a carbon particle 2 on which a catalyst such as platinum 1 is supported, and an electrolyte resin (such as Nafion (registered trademark)) 4, which is an ion exchange resin, dispersed in a solvent. A predetermined amount of a pore-forming agent 5 is further added to the ink. The pore-forming agent 5 consists of ammonium carbonate or camphor having a predetermined particle diameter (preferably on the order of 10 to 100 nm), for example. The above catalyst layer ink is applied to an appropriate substrate sheet or a conventionally known diffusion layer, both of which are not shown, thereby forming a first catalyst layer 10 (such as an air-electrode catalyst layer) as shown in Fig. 1a The catalyst layer 10 is then subjected to drying treatment at temperature such that the pore-forming agent 5 does not dissolve or sublimate (such as 60°C, more or less). The drying treatment causes the solvent to be thrown away, while the pore-forming agent 5 remains as is; namely, it blocks the pores in the first catalyst layer 10.

Thereafter, as shown in Fig. 1b, an electrolyte membrane ink is applied to the first catalyst layer 10 after drying treatment, to form an electrolyte layer 20. The electrolyte ink consists of an electrolyte resin (such as Nafion (registered trademark)), which is a conventionally known ion exchange resin, dissolved in a solvent. At the time of application, the pores in the first catalyst layer 10 are blocked by the pore-forming agent 5, so that the electrolyte resin solution, i.e., the electrolyte membrane ink, does not seep into the first catalyst layer 10.

The electrolyte layer 20 is then subjected to drying treatment. The drying treatment is performed at temperature higher than the temperature at which the first catalyst layer 10 was subjected to drying treatment, such that the pore-forming agent 5 added in the first catalyst layer 10 can dissolve or sublimate and thus disappear (such as 100°C to 130°C). In this drying treatment step, the pore-forming agent 5 added in the first catalyst layer 10 gradually dissolves or sublimates, and after a predetermined period of time, it is completely eliminated from within the first catalyst layer 10. Such state is shown schematically in Fig. 1c, where it is seen that pores 6 are formed where the pore-forming agent 5 disappeared, the pores 6 functioning as a gas diffusion channel or a drainage channel. Meanwhile, the electrolyte resin in the first catalyst layer 10 is re-dissolved, thereby strongly bonding the electrolyte layer 20 and the first catalyst layer 10 at the interface thereof.

Thereafter, on the electrolyte layer 20 following drying treatment, a second catalyst layer 30 (such as a fuel-electrode catalyst layer) is formed. The ink for the second catalyst layer may consist of a conventionally used ink for the fuel-electrode catalyst layer as is; to which ink a predetermined amount of the same pore-forming agent 5 as used in the first catalyst layer may be added. In the illustrated example, the ink for the second catalyst layer contains the same pore-forming agent 5 as added in the ink for the first catalyst layer added therein. As shown schematically in Fig. 1d, after the second catalyst layer ink is applied to the electrolyte layer 20 to a required thickness, the second catalyst layer 30 is subjected to drying treatment at 100°C to 130°C. Such drying treatment causes the pore-forming agent 5 in the second catalyst layer 10 to dissolve or sublimate and completely disappear. As shown schematically in Fig. 1e, at portions where the pore-forming agent 5 disappeared, pores 6 are formed which function as a gas diffusion channel or a drainage channel, as in the first catalyst layer 10.

Through the foregoing steps, a membrane-electrolyte assembly 40 is completed. While not shown in the drawings, gas diffusion layers are provided as necessary outside the catalyst layers, and by disposing separators outside thereof a single fuel cell is completed. Since the second catalyst layer 30 is formed over the electrolyte layer 20, the electrolyte resin solution hardly seeps into the second catalyst layer 30. Therefore, the generation efficiency of the obtained membrane-electrolyte assembly is not greatly influenced even if the second catalyst layer ink does not contain the pore-forming agent 5 added therein.

In the embodiment shown in Fig. 2, the steps up to the application of the electrolyte membrane ink to the first catalyst layer 10, as shown schematically in Figs. 2a and 2b, are the same as the embodiment of Fig. 1. In the present embodiment, however, after formation of the electrolyte layer 20 by the application of the electrolyte membrane ink, the second catalyst layer 30 is formed by applying the second catalyst layer ink to the electrolyte layer 20 without performing drying treatment, as shown in Fig. 2c. In this case, too, the second catalyst layer ink may consist of a conventionally used ink for such fuel-electrode catalyst layer as is. The ink may contain a predetermined amount of the same pore-forming agent 5 as in the first catalyst layer ink. In the illustrated example, the same pore-forming agent 5 as added in the first catalyst layer ink is added in the ink for the second catalyst layer.

The thus stacked body is subjected to drying treatment at temperature from 100°C to 130°C. As a result, the pore-forming agents 5 added in the first catalyst layer 10 and the second catalyst layer 30 simultaneously dissolve or sublimate, and thus completely disappear from both catalyst layers. As shown schematically in Fig. 2d, at portions where the pore-forming agent 5 was eliminated in the first catalyst layer 10 and the second catalyst layer 30, pores 6 are formed which function as a gas diffusion channel or a drainage channel in the completed membrane-electrolyte assembly 40. In this case, too, the generation efficiency of the obtained membrane-electrolyte assembly is not greatly affected even if the second catalyst layer ink does not contain the pore-forming agent 5 added therein.

Fig. 3a and 3b further shows schematically and partly another embodiment of manufacture. In this example, the application of ink and drying treatment to the first catalyst layer 10 are performed in two steps, where the amount of pore-forming agent 5 added to the ink is varied in each step. For example, the amount of addition of the pore-forming agent to the ink 11 used in the first step may be smaller (such as 30 to less than 10 wt%), and the amount of the pore-forming agent added to the ink 12 further coated thereon in the second step may be greater (such as 50 to less than 30 wt%).

After the application of the first ink 11 and following drying treatment, the second ink 12 may be applied thereto and drying treatment may be performed again; alternatively, after applying the first ink 11 and applying the second ink 12 thereto, drying treatment may be performed. After drying treatment, the electrolyte ink is applied in the same way as described with reference to Figs. 1 and 2, whereby the state shown schematically in Fig. 3a is obtained. The temperature conditions of the drying treatment of the first catalyst layer 10 and the electrolyte layer 20 are the same as those described with reference to Fig. 1 and 2. Further, while not shown in the drawings, a second catalyst layer 30 is formed on the electrolyte membrane 20. Preferably, the second catalyst layer 30 also has a double-layer structure employing two kinds of ink with different amounts of pore-forming agent added. In this case, the layer adjacent to the electrolyte layer 20 is comprised of the second ink 12 having a greater amount of impregnation of the pore-forming agent 5, and the first ink is further applied thereto. The conditions concerning the application and drying of the second catalyst layer ink may be the same as those described with reference to Figs. 1 and 2.

Fig. 3b schematically shows part of the membrane-electrolyte assembly following drying treatment. As shown, the elimination of the pore-forming agent 5 through dissolving or sublimation results in the formation of the pores 6 in the first catalyst layer 10. The pore capacity of the catalyst layer (i.e., the layer nearer to the electrolyte membrane 20) 12 in which the second ink is used is greater than the pore capacity of the catalyst layer (outer layer) 11 in which the first ink is used. While not shown, such state of distribution of pores is also present in the second catalyst layer. By adjusting the particle diameter of the pore-forming agent 5 added to the individual ink, the pore diameter can also be adjusted.

Fig. 4 schematically shows part of the membrane-electrolyte assembly that is formed when the order of application of the first ink 11 and the second ink 12 is reversed. In this example, in the first catalyst layer 10, the pore capacity of the catalyst layer (the layer closer to the electrolyte membrane 20) 11 in which the first ink is used is smaller than the pore capacity of the catalyst layer (outer layer) 12 in which the second ink is used. While not shown in the drawings, it is also possible to obtain such state of distribution ofthe pores in the second catalyst layer in the same way. In the examples shown in Figs. 3 and 4, the catalyst layer has the double-layer structure with different gap capacities; it is also possible to provide a layer structure of three or more layers by using three or more kinds of ink with different amounts of addition of the pore-forming agent.

### Examples

In the following, the invention is described by way of examples and comparative examples.

### Example 1

An air-electrode catalyst layer ink (first catalyst layer ink), a fuel-electrode catalyst layer ink (second catalyst layer ink), and an electrolyte layer ink were used. The air-electrode catalyst layer ink (first catalyst layer ink) and the fuel-electrode catalyst layer ink (second catalyst layer ink) were prepared in four kinds each, having different amounts of the pore-forming agent added therein. Specifically, an ultra fine particle of ammonium carbonate having a particle diameter of 10 nm was added as the pore-forming agent in amounts of 40 wt%, 30 wt%, 20 wt%, and 10 wt% with respect to the weight of the solid components of the catalyst layer ink (carbon, platinum, and electrolyte). Ammonium carbonate starts to sublimate at temperature of 60°C or higher, and completely sublimates at 130°C.

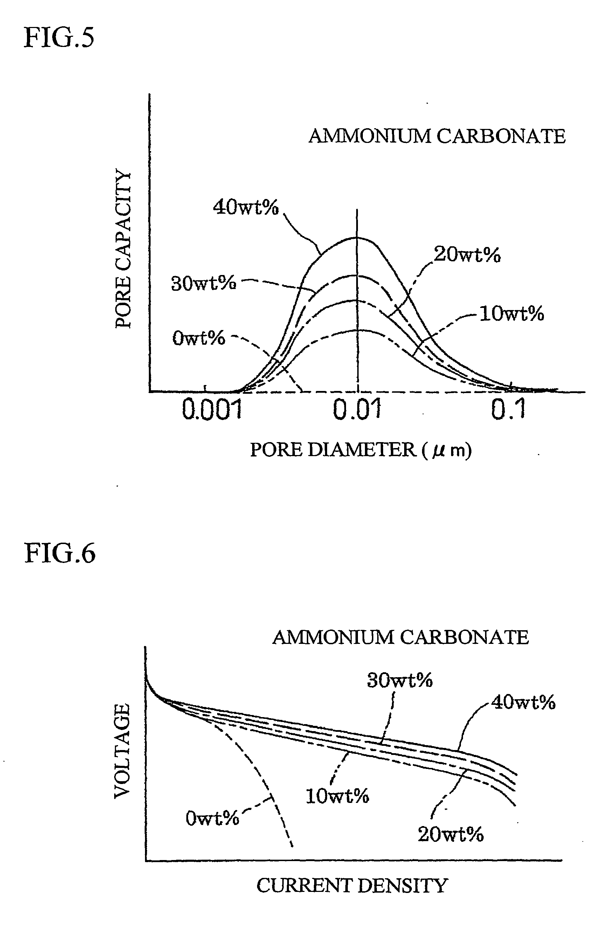

Each of the first catalyst layer inks was applied to the substrate sheet and subjected to drying treatment at temperature of 60°C or lower. After drying treatment, the electrolyte layer ink was applied to the first catalyst layer, to which further the second catalyst layer ink was applied. Thereafter, the electrolyte layer and the second catalyst layer were subjected to drying treatment at 130°C, thereby constructing a membrane-electrolyte assembly. The drying treatment dissolved and completely eliminated the ammonium carbonate, whereby pores were formed in the first and second catalyst layers. Fig. 5 shows the relationship between pore capacity and the ratio of ammonium carbonate added.

With the four types of membrane-electrolyte assembly fabricated, fuel cell modules were prepared, of which generation efficiency was tested in terms of the relationship between voltage and current density. The result is shown in Fig. 6.

### Example 2

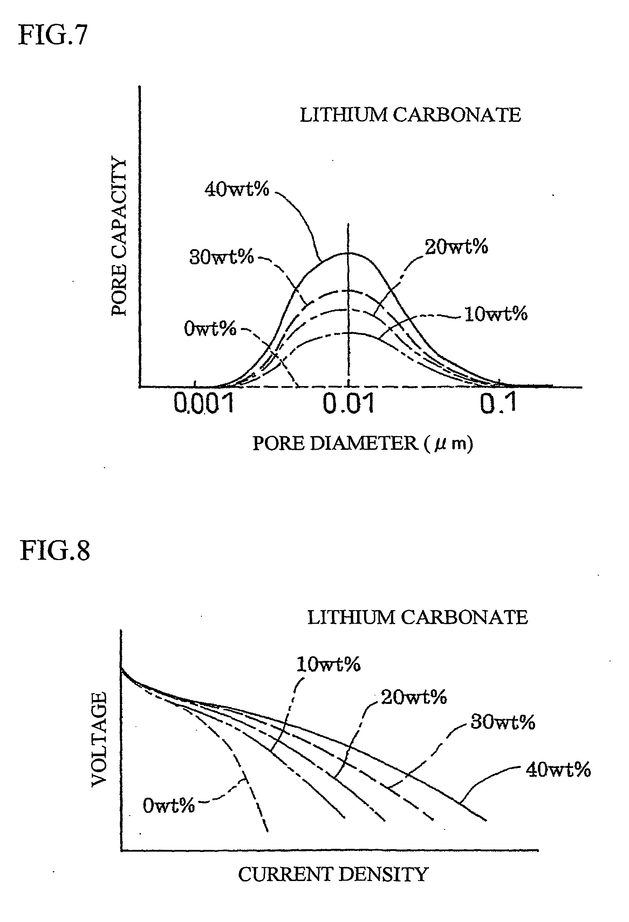

Membrane-electrolyte assemblies were fabricated in the same way as Example 1 with the exception that the pore-forming agent consisted of an ultra fine particle of lithium carbonate having a particle diameter of 10 mn was used, instead of ammonium carbonate. Fig. 7 shows the relationship between their pore capacities and their ratios of lithium carbonate added. Also, with the four types of membrane-electrolyte assemblies, fuel cell modules were prepared, and their generation efficiency was tested in terms of the relationship between voltage and current density. The result is shown in Fig. 8.

### Comparative Example 1

A membrane-electrolyte assembly was fabricated in the same way as Example 1 with the exception that the air-electrode catalyst layer ink (first catalyst layer ink) and the fuel-electrode catalyst layer ink (second catalyst layer ink) had no pore-forming agent added therein. The relationship between its pore capacity and ratio of ammonium carbonate added is indicated by "Ammonium carbonate 0 wt%" in Fig. 5. With the thus fabricated membrane-electrolyte assembly, a fuel cell module was constructed, and its generation efficiency was tested in terms of the relationship between voltage and current density. The result is shown in Fig. 6 with respect to the ratio 0 wt% of ammonium carbonate added.

### Evaluation

As shown in Figs. 5 and 7, the manufacturing method of the invention enables the formation of pores in proportion to the amount of pore-forming agent added in the catalyst layer. Furthermore, as shown in Fig. 6 and 8, compared with the membrane-electrolyte assembly of the Comparative Example having no addition of pore-forming agent, the generation efficiency of the inventive membrane-electrolyte assemblies is improved. This shows that the problem of seeping of electrolyte resin solution into the first catalyst layer and the resultant deterioration in performance is prevented. A comparison of Figs. 6 and 8 demonstrates that higher generation efficiencies are obtained by using ammonium carbonate than lithium carbonate as the pore-forming agent, thus indicating some variations in generation efficiency depending on the type of pore-forming agent; this is believed due to a decrease in drainage caused by the hydrophilicity of the catalyst layer based on the remaining lithium.

### Example 3

A membrane-electrolyte assembly was fabricated in the same way as Example 1 with the exception that the air-electrode catalyst layer ink (first catalyst layer ink) and the fuel-electrode catalyst layer ink (second catalyst layer ink) were prepared each in three types, having different amounts of pore-forming agent added, namely: 0 wt%; 20 wt%; and 40 wt%. The catalyst layer ink with the ratio of pore-forming agent added 0 wt% was used in an outer-most layer. The catalyst layer ink with the ratio of pore-forming agent added 20 wt% was used in an intermediate layer. The catalyst layer ink with the amount of pore-forming agent added 40 wt% was used in a layer adjacent to the electrolyte layer.

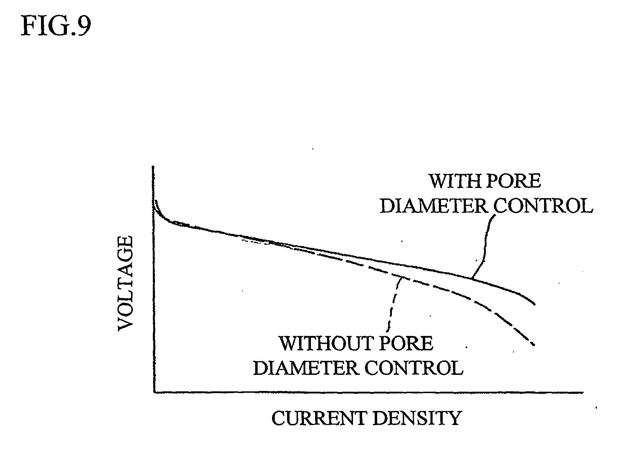

With the thus fabricated membrane-electrolyte assembly, a fuel cell module was prepared, and its generation efficiency was tested in terms of the relationship between voltage and current density in the same way as in Example 1. The result is shown in Fig. 9 with reference to "With pore distribution control."

### Comparative Example 2

A membrane-electrolyte assembly was fabricated in the same way as Example 3 with the exception that the three catalyst layer inks all had 20 wt% of the pore-forming agent added therein. With the thus fabricated membrane-electrolyte assembly, a fuel cell module was constructed, and its generation efficiency was tested in terms of the relationship between voltage and current density in the same way as in Example 1. The result is shown in Fig. 9 with reference to "Without pore distribution control."

### Evaluation

In the membrane-electrolyte assembly of Example 3, since the pore capacity of the catalyst layers sequentially decreases as they are located away from the electrolyte layer, the product water on the cathode side and the back-diffused water on the anode side are drained efficiently by capillary action through each catalyst layer. Consequently, it becomes possible, as shown in Fig. 9, to reduce concentration overpotential during electricity generation by the fuel cell compared with the Comparative Example with its uniform thickness-wise pore density. Particularly, performance in the middle- to high-current density regions is improved.

## Claims

1. A method of manufacturing a membrane-electrolyte assembly by performing the application of individual inks and drying treatment for a first catalyst layer, an electrolyte layer, and a second catalyst layer in order, the method comprising the steps of:
subjecting the electrolyte layer to drying treatment at a temperature higher than the drying treatment temperature of the first catalyst layer;
adding, into an ink for the first catalyst layer, a substance, as a pore-forming agent, that remains at the temperature of drying treatment of the first catalyst layer and that dissolves or sublimates and disappears at the temperature of drying treatment of the electrolyte membrane; applying the ink for the first catalyst layer;
subjecting the thus applied first catalyst layer to drying treatment;
applying an ink for the electrolyte layer;
subjecting the applied electrolyte layer to drying treatment;
applying an ink for the second catalyst layer; and
subjecting the applied second catalyst layer to drying treatment.

2. A method of manufacturing a membrane-electrolyte assembly by performing the application of individual inks and drying treatment for a first catalyst layer, an electrolyte layer, and a second catalyst layer in order, the method comprising the steps of:
subjecting the electrolyte layer to drying treatment at a temperature higher than the drying treatment temperature of the first catalyst layer;
adding, into an ink for the first catalyst layer, a substance, as a pore-forming agent, that remains at the temperature of drying treatment of the first catalyst layer and that dissolves or sublimates and disappears at the temperature of drying treatment of the electrolyte membrane; applying the ink for the first catalyst layer;
subjecting the thus applied first catalyst layer to drying treatment;
applying an ink for the electrolyte layer;
applying an ink for the second catalyst layer; and
subjecting the applied second catalyst layer and the electrolyte layer to drying treatment simultaneously.

3. The method of manufacturing a membrane-electrolyte assembly according to claim 1 or 2, wherein the pore-forming agent comprises a carbonate such as ammonium carbonate, calcium carbonate, or lithium carbonate, camphor, or naphthalene.

4. The method of manufacturing a membrane-electrolyte assembly according to claim 3, wherein the temperature at which the first catalyst layer is subjected to drying treatment is 60°C or lower, and the temperature at which the electrolyte layer is subjected to drying treatment is 130°C or lower.

5. The method of manufacturing a membrane-electrolyte assembly according to any one of claims 1 to 4, wherein the amount of pore-forming agent added is 50 wt% or less.

6. The method of manufacturing a membrane-electrolyte assembly according to claim 1 or 2, further comprising the step of adding, into the ink for the second catalyst layer, a substance, as the pore-forming agent, that dissolves or sublimates and disappears at the temperature at which the electrolyte membrane is subjected to drying treatment.

7. The method of manufacturing a membrane-electrolyte assembly according to any one of claims 1 to 6, wherein the application of ink and drying treatment for at least the first catalyst layer of the first catalyst layer and the second catalyst layer are performed in two or more steps, the amount of the pore-forming agent added to the ink being varied in each step.

8. The method of manufacturing a membrane-electrolyte assembly according to claim 7, wherein the step of applying the ink includes at least the step of forming an ink applied layer in which the amount of the pore-forming agent added is 50 to less than 30 wt%, an ink applied layer in which the amount of the pore-forming agent added is 30 to less than 10 wt%, and an ink applied layer in which the amount of the pore-forming agent added is 10 wt% or less.

9. A membrane-electrolyte assembly obtained by the manufacturing method according to any one of claims 1 to 8.

10. A fuel cell comprising the membrane-electrolyte assembly according to claim 9.

## Patentansprüche

1. Verfahren zum Herstellen einer Membran/Elektrolyt-Anordnung durch Ausführen der Auftragung individueller Tinten und einer Trocknungsbehandlung für eine erste Katalysatorschicht, eine Elektrolytschicht und eine zweite Katalysatorschicht, in dieser Reihenfolge, wobei das Verfahren die folgenden Schritte aufweist:
Durchführen einer Trocknungsbehandlung an der Elektrolytschicht bei einer Temperatur, die höher ist als die Temperatur, mit der die Trocknungsbehandlung an der ersten Katalysatorschicht durchgeführt wird;
Hinzufügen einer Substanz, bei der es sich um einen Porenbildner handelt, zu einer Tinte für die erste Katalysatorschicht, wobei diese Substanz bei der Temperatur, mit der die Trocknungsbehandlung an der ersten Katalysatorschicht durchgeführt wird, bestehen bleibt und sich bei der Temperatur, mit der die Trocknungsbehandlung an der Elektrolytmembran durchgeführt wird, auflöst oder sublimiert wird und verschwindet; Auftragen der Tinte für die erste Katalysatorschicht;
Durchführen einer Trocknungsbehandlung an der solchermaßen aufgetragenen ersten Katalysatorschicht;
Auftragen einer Tinte für die Elektrolytschicht;
Durchführen einer Trocknungsbehandlung an der solchermaßen aufgetragenen Elektrolytschicht;
Auftragen einer Tinte für die zweite Katalysatorschicht; und
Durchführen einer Trocknungsbehandlung an der solchermaßen aufgetragenen zweiten Katalysatorschicht.

2. Verfahren zum Herstellen einer Membran/Elektrolyt-Anordnung durch Ausführen der Auftragung einzelner Tinten und einer Trocknungsbehandlung für eine erste Katalysatorschicht, eine Elektrolytschicht und eine zweite Katalysatorschicht, in dieser Reihenfolge, wobei das Verfahren die folgenden Schritte aufweist:
Durchführen einer Trocknungsbehandlung an der Elektrolytschicht bei einer Temperatur, die höher ist als die Temperatur, mit der die Trocknungsbehandlung an der ersten Katalysatorschicht durchgeführt wird;
Hinzufügen einer Substanz, bei der es sich um einen Porenbildner handelt, zu einer Tinte für die erste Katalysatorschicht, wobei diese Substanz bei der Temperatur, mit der die Trocknungsbehandlung an der ersten Katalysatorschicht durchgeführt wird, bestehen bleibt und sich bei der Temperatur, mit der die Trocknungsbehandlung an der Elektrolytmembran durchgeführt wird, auflöst oder sublimiert wird und verschwindet; Auftragen der Tinte für die erste Katalysatorschicht;
Durchführen einer Trocknungsbehandlung an der solchermaßen aufgetragenen ersten Katalysatorschicht;
Auftragen einer Tinte für die Elektrolytschicht;
Auftragen einer Tinte für die zweite Katalysatorschicht; und
Durchführen einer Trocknungsbehandlung gleichzeitig an der aufgetragenen zweiten Katalysatorschicht und der Elektrolytschicht.

3. Verfahren zum Herstellen einer Membran/Elektrolyt-Anordnung nach Anspruch 1 oder 2, wobei der Porenbildner ein Carbonat, wie beispielsweise Ammoniumcarbonat, Calciumcarbonat oder Lithiumcarbonat, Campher oder Naphthalen aufweist.

4. Verfahren zum Herstellen einer Membran/Elektrolyt-Anordnung nach Anspruch 3, wobei die Temperatur, bei der die erste Katalysatorschicht der Trocknungsbehandlung unterzogen wird, 60 °C oder weniger ist, und die Temperatur, bei der die Elektrolytschicht einer Trocknungsbehandlung unterzogen wird, 130 °C oder weniger ist.

5. Verfahren zum Herstellen einer Membran/Elektrolyt-Anordnung nach einem der Ansprüche 1 bis 4, wobei die Menge an zugegebenem Porenbildner 50 Gew.-% oder weniger ist.

6. Verfahren zum Herstellen einer Membran/Elektrolyt-Anordnung nach Anspruch 1 oder 2, ferner den Schritt des Zugebens einer Substanz, bei der es sich um einen Porenbildner handelt, zu der Tinte für die zweite Katalysatorschicht aufweisend, wobei dieser Porenbildner sich bei der Temperatur, mit der die Trocknungsbehandlung an der Elektrolytmembran durchgeführt wird, auflöst oder sublimiert wird und verschwindet.

7. Verfahren zum Herstellen einer Membran/Elektrolyt-Anordnung nach einem der Ansprüche 1 bis 6, wobei die Auftragung von Tinte und die Trocknungsbehandlung für die erste Katalysatorschicht oder für die erste und die zweite Katalysatorschicht in zwei oder mehr Schritten durchgeführt werden, wobei die Menge des der Tinte zugegebenen Porenbildners in jedem Schritt anders ist.

8. Verfahren zum Herstellen einer Membran/Elektrolyt-Anordnung nach Anspruch 7, wobei der Schritt der Auftragung der Tinte mindestens den Schritt des Ausbildens einer aufgetragenen Tintenschicht, in der die Menge an zugegebenem Porenbildner 50 bis weniger als 30 Gew.-% ist, einer aufgetragenen Tintenschicht, in der die Menge an zugegebenem Porenbildern 30 bis weniger als 10 Gew.-% ist, und einer aufgetragenen Tintenschicht, in der die Menge des zugegebenen Porenbildners 10 Gew.-% oder weniger ist, aufweist.

9. Membran/Elektrolyt-Anordnung, die anhand des Herstellungsverfahrens nach einem der Ansprüche 1 bis 8 erhalten wurde.

10. Brennstoffzelle, die die Membran/Elektrolyt-Anordnung nach Anspruch 9 aufweist.

## Revendications

1. Procédé de fabrication d'un ensemble membrane-électrolyte consistant à réaliser l'application d'encres individuelles et un traitement de séchage pour une première couche de catalyseur, une couche d'électrolyte et une seconde couche de catalyseur dans cet ordre, le procédé comprenant les étapes consistant à :
soumettre la couche d'électrolyte à un traitement de séchage à une température supérieure à la température du traitement de séchage de la première couche de catalyseur ;
ajouter, dans une encre pour la première couche de catalyseur, une substance, en tant qu'agent porogène, qui demeure à la température de traitement du séchage de la première couche de catalyseur et qui se dissout ou se sublime et disparaît à la température du traitement de séchage de la membrane électrolyte ; appliquer l'encre pour la première couche de catalyseur ; soumettre la première couche de catalyseur ainsi appliquée au traitement de séchage ;
appliquer une encre pour la couche d'électrolyte ;
soumettre la couche d'électrolyte appliquée à un traitement de séchage ;
appliquer une encre pour la seconde couche de catalyseur ; et
soumettre la seconde couche de catalyseur appliquée à un traitement de séchage.

2. Procédé de fabrication d'un ensemble membrane-électrolyte consistant à réaliser l'application d'encres individuelles et un traitement de séchage pour une première couche de catalyseur, une couche d'électrolyte et une seconde couche de catalyseur dans cet ordre, le procédé comprenant les étapes consistant à :
soumettre la couche d'électrolyte à un traitement de séchage à une température supérieure à la température du traitement de séchage de la première couche de catalyseur ;
ajouter, dans une encre pour la première couche de catalyseur, une substance, en tant qu'agent porogène, qui demeure à la température du traitement de séchage de la première couche de catalyseur et qui se dissout ou se sublime et disparaît à la température du traitement de séchage de la membrane électrolyte ; appliquer l'encre pour la première couche de catalyseur ; soumettre la première couche de catalyseur ainsi appliquée au traitement de séchage ;
appliquer une encre pour la couche d'électrolyte ;
appliquer une encre pour la seconde couche de catalyseur ; et
soumettre simultanément la seconde couche de catalyseur appliquée et la couche d'électrolyte à un traitement de séchage.

3. Procédé de fabrication d'un ensemble membrane-électrolyte selon la revendication 1 ou 2, dans lequel l'agent porogène comprend un carbonate tel que le carbonate d'ammonium, le carbonate de calcium ou le carbonate de lithium, le camphre ou le naphtalène.

4. Procédé de fabrication d'un ensemble membrane-électrolyte selon la revendication 3, dans lequel la température à laquelle la première couche de catalyseur est soumise au traitement de séchage est inférieure ou égale à 60 °C, et la température à laquelle la couche électrolyte est soumise au traitement de séchage est inférieure ou égale à 130 °C.

5. Procédé de fabrication d'un ensemble membrane-électrolyte selon l'une quelconque des revendications 1 à 4, dans lequel la quantité d'agent porogène ajouté est inférieure ou égale à 50 % en poids.

6. Procédé de fabrication d'un ensemble membrane-électrolyte selon la revendication 1 ou 2, comprenant en outre l'étape consistant à ajouter, dans l'encre pour la seconde couche de catalyseur, une substance, en tant qu'agent porogène, qui se dissout ou se sublime et disparaît à la température à laquelle l'ensemble membrane-électrolyte est soumis au traitement de séchage.

7. Procédé de fabrication d'un ensemble membrane-électrolyte selon l'une quelconque des revendications 1 à 6, dans lequel l'application d'une encre et le traitement de séchage pour au moins la première couche de catalyseur de la première couche de catalyseur et de la seconde couche de catalyseur sont réalisés en deux étapes ou plus, la quantité de l'agent porogène ajouté à l'encre variant dans chaque étape.

8. Procédé de fabrication d'un ensemble membrane-électrolyte selon la revendication 7, dans lequel l'étape consistant à appliquer l'encre comprend au moins l'étape consistant à former une couche sur laquelle l'encre est appliquée et dans laquelle la quantité de l'agent porogène ajouté est comprise dans la plage allant de 50 à moins de 30 % en poids, une couche sur laquelle l'encre est appliquée et dans laquelle la quantité de l'agent porogène ajouté est comprise dans la plage allant de 30 à moins de 10 % en poids, et une couche sur laquelle l'encre est appliquée et dans laquelle la quantité de l'agent porogène ajouté est inférieure ou égale à 10 % en poids.

9. Ensemble membrane-électrolyte obtenu par le procédé de fabrication selon l'une quelconque des revendications 1 à 8.

10. Pile à combustible comprenant l'ensemble membrane-électrolyte selon la revendication 9.
